# EUROPÄISCHE PATENTANMELDUNG

(11) **EP 4 098 931 A1**
(43) Veröffentlichungstag der Anmeldung: **07.12.2022**
(21) Anmeldenummer: 21020290.9
(22) Anmeldetag: 01.06.2021
(51) Int. Cl.: F17C 5/06

(54) **VERFAHREN UND ANLAGE ZUM ABKÜHLEN UND TRANSPORTIEREN EINES FLUIDS**

(71) Anmelder: Linde GmbH, 82049 Pullach (DE)
(72) Erfinder: Dorner, Sascha, Gramatneusiedl (AT); Fahrner, Daniel, Kirchberg (AT); Vidic, Karl Jojo, Wien (AT); Wyss, Jan, Maria Lanzendorf (AT)
(74) Vertreter: Fischer, Werner

(57) **Zusammenfassung**

Die Erfindung betrifft ein Verfahren zum Abkühlen und Transportieren eines Fluids (H₂), bei dem das Fluid (H₂) in einer Abkühleinrichtung (120) abgekühlt und dann mittels einer Transferleitung (150) an einen von der Abkühleinrichtung (120) entfernten Verwendungsort (130) transportiert wird, wobei ein Kühlmedium aus der Abkühleinrichtung (120) entnommen und über eine Kühlmediumvorlaufleitung (160) bis zu einer Umkehrstelle (152) zwischen der Abkühleinrichtung (120) und dem Verwendungsort (130) transportiert und von dort in einer Kühlmediumvorlaufleitung (162), die zumindest abschnittsweise in thermischem Kontakt mit der Transferleitung (150) steht, zurück zur Abkühleinrichtung (120) transportiert wird, sowie eine entsprechende Anlage (100).

## Beschreibung

Die Erfindung betrifft ein Verfahren zum Abkühlen und Transportieren eines Fluids wie z.B. Wasserstoff, bei dem das Fluid in einer Abkühleinrichtung abgekühlt und dann mittels einer Transferleitung an einen Verwendungsort transportiert wird, sowie eine entsprechende Anlage.

### Hintergrund

Um Fahrzeuge, die mittels gasförmigen Wasserstoffs angetrieben werden, sicher und normgerecht mit Wasserstoff betanken zu können, ist es erforderlich, den Wasserstoff vor dem Betankungsvorgang auf Temperaturen von bis zu 233,15 K (bzw. -40°C) abzukühlen. Dies ist z.B. anhand von Betankungsprotokollen reglementiert, die z.B. in den Normen SAE J2601 oder JPEC-S 0003 dokumentiert sind.

Grundsätzlich erwärmt sich gasförmiger Wasserstoff aufgrund des negativen Joule-Thomson Effekts während einer isenthalpen Entspannung. Da bei einer Betankung ein Druckgefälle (isenthalpe Entspannung) durch Überströmen zwischen der Tankstelleninfrastruktur und dem Fahrzeugtank vorliegt, sind Wasserstofftankstellen mit Kühlsystemen ausgestattet, die typischerweise eine einer Kompressionskältemaschine und einem Wasserstoff-Wärmeübertrager aufweisen, wobei auch unterschiedliche Kältespeicherkonzepte zu Einsatz kommen können.

In der Regel werden Wasserstofftankstellen in zwei Systembereiche unterteilt. Der erste Systembereich setzt sich aus der Verdichtung des Wasserstoffs, dessen Speicherung in Hochdruckbehältern sowie dessen Konditionierung und Kühlung zusammen. Der zweite Systembereich umfasst den Dispenser bzw. die Abgabe- oder Zapfstelle und das zugehörige Betankungsequipment, wie beispielsweise eine Abreiß-und Betankungskupplung und einen Betankungsschlauch. Da beide Systembereiche aufgrund von örtlichen Gegebenheiten meist nicht immer direkt aneinander angrenzen, liegen häufig Distanzen von bis zu 100 m und in Sonderfällen sogar noch mehr zwischen den beiden erwähnten Systembereichen.

Im Rahmen einer Fahrzeugbetankung muss der komprimierte und vorgekühlte Wasserstoff über diese Distanzen transportiert werden, und zwar insbesondere möglichst ohne Erwärmung, um normgerecht und daher unter Einhaltung der anzuwendenden Betankungsprotokolle vertankt werden zu können.

Vor diesem Hintergrund stellt sich die Aufgabe, eine Möglichkeit bereitzustellen, Wasserstoff oder auch anderes gekühltes Fluid, das über eine gewisse Strecke zu transportieren ist, möglichst gut bzw. effektiv zu kühlen.

### Offenbarung der Erfindung

Diese Aufgabe wird durch ein Verfahren und eine Anlage zum Abkühlen und Transportieren eines Fluids mit den Merkmalen der unabhängigen Patentansprüche gelöst. Bevorzugte Ausgestaltungen sind Gegenstand der abhängigen Patentansprüche sowie der nachfolgenden Beschreibung.

### Vorteile der Erfindung

Die Erfindung beschäftigt sich mit dem Abkühlen und anschließenden Transport oder Transfer eines Fluids bzw. Mediums über eine gewisse Strecke und insbesondere der Kühlung des Fluids über diese Strecke hinweg, bis zum Verwendungsort. Dies erfolgt insbesondere über ein Rohr bzw. eine Rohrleitung. Als Fluid bzw. Medium kommen hier insbesondere Gase oder Gasgemische, auch verflüssigte Gase sowie Flüssigkeiten in Betracht. Ein besonders bevorzugtes Fluid ist Wasserstoff, der z.B. zunächst in bzw. mittels einer Kältemaschine oder einer anderen Abkühleinrichtung gekühlt bzw. vorgekühlt wird, und dann in gekühlter Form zu einem Dispenser (Betankungsanlage) einer Wasserstofftankstelle als (oder am) Verwendungsort zu transportieren ist, wie eingangs erwähnt. Wenngleich die Erfindung nachfolgend insbesondere in Bezug auf Wasserstoff und Wasserstoff-Tankstellen beschrieben wird, so lässt sich die Erfindung auch bei anderen Fluiden anwenden, insbesondere auch in der chemischen Industrie (z.B. Erdöl-, Kunststoff-, Lebensmittel- und Pharmaindustrie).

Grundsätzlich kommen als Fluide hierbei alle Flüssigkeiten in Betracht, deren Gefrierpunkt oberhalb der Temperatur des Mediums in der Kühlleitung liegt. Das können z.B. wässrige Lösungen oder organische Verbindungen sowie Kombinationen davon sein. Zudem kommen als Fluide alle im Periodensystem vorhandenen Gase sowie deren Mischungen in Betracht. Auch disperse Systeme (Flüssigkeits-Gasgemische der genannten Medien) können gekühlt werden.

Eine Möglichkeit der Kühlung des Fluids über die Strecke hinweg ist hierbei zunächst grundsätzlich eine Isolation der Rohr- bzw. Transferleitung. Typische Isolationssysteme haben, insbesondere bei langen Rohrleitungsstrecken, allerdings einen (meist zu) hohen Wärmeeintrag aus der Umgebung, speziell bei erhöhten Umgebungstemperaturen. Wird der vorgekühlte Wasserstoff z.B. durch Wasserstoff-Hochdruckleitungen geführt, die eine höhere Materialtemperatur als der kalte Wasserstoff aufweisen, kann es infolge einer zu hohen Wasserstoff-Temperatur am Übergabepunkt zum Fahrzeug (Betankungskupplung am Dispenser) zu Betankungsabbrüchen kommen.

Dies ist darauf zurückzuführen, dass sich der Wasserstoff während des Antransports vom Wasserstoff-Wärmeübertrager (Abkühleinrichtung bzw. Kältemaschine vor Einbringung in die Transportleitung) bis zum Dispenser über die erlaubten Grenztemperaturen hinaus erwärmt. Aktuelle Anforderungen von Betreibern von Wasserstofftankstellen beinhalten aufgrund eines eingeschränkten Platzangebotes z.B. die Aufstellung des letzten Wärmeübertragers oder Kältespeichers in einer Entfernung von ca. 20 bis 100 m oder mehr bis zum Dispenser, was äußerst hohe Anforderungen an die thermische Isolation der Wasserstoff-Hochdruckleitungen stellt, da möglichst konstante und normgerechte Wasserstofftemperaturen am Übergabepunkt sicherzustellen sind.

Liegen zwischen den Betankungen relativ lange Zeitspannen von z.B. einigen Stunden (Standbybetrieb), kann sich die Temperatur der Hochdruckleitung (Transferleitung) selbst, trotz deren thermischer Isolation, der Umgebungstemperatur annähern. Der zu vertankende Wasserstoff kann während einer auf diese Zeitspanne folgenden Betankung daher so weit bzw. so hoch erwärmt werden, dass die Betankung aus Sicherheitsgründen nicht mehr erfolgreich durchgeführt werden kann.

Alternative Begleitkühlungen, deren Wirkung auf thermoelektrischen Effekten (z.B. Peltiereffekt) beruhen, sind aufgrund ihres geringen Wirkungsgrades sowie dem damit einhergehenden Installations- und Kostenaufwand in der Regel unzureichend, um insbesondere bei Wasserstoff-Tankstellen sinnvoll und kosteneffizient eingesetzt zu werden.

Im Rahmen der vorliegenden Erfindung wird nun vorgeschlagen, dass ein Kühlmedium aus der Abkühleinrichtung entnommen und über eine Kühlmediumvorlaufleitung bis zu einer Umkehrstelle zwischen der Abkühleinrichtung und dem Verwendungsort transportiert und von dort in einer Kühlmediumrücklaufleitung zurück zur Abkühleinrichtung transportiert wird. Die Kühlmediumrücklaufleitung steht dabei zumindest abschnittsweise in thermischem Kontakt mit der Transferleitung, sie kann insbesondere auch parallel hierzu verlaufen, dabei insbesondere in zumindest mittelbarem Kontakt zur Transferleitung. Es handelt sich dabei also insbesondere um eine sog. Begleitkühlung. Die Kühlmediumvorlaufleitung kann grundsätzlich weiter entfernt von der Transferleitung verlaufen, zweckmäßig ist aber auch hier eine nahe Verlegung, ggf. auch parallel zur Transferleitung, wenngleich kein thermischer Kontakt zwingend nötig ist.

Zweckmäßigerweise sollten keine signifikanten Höhendifferenzen zwischen Anfangs-und Endpunkt der Kühlmediumvorlaufleitung sowie zwischen Anfangs- und Endpunkt der Kühlmediumrücklaufleitung liegen, um Druckverluste einzusparen und um im Fall einer Kühlung mittels Verdampferprinzip eine ausreichende Zirkulation des Schmiermittels im Kältemittelkreis zu gewährleisten. Bei der Transferleitung ist daher bevorzugt maximal 1 m Höhendifferenz vorhanden, und bei den Kühlmedienleitungen (jedenfalls dann, wenn das Kältemittel mit Verdampferprinzip verwendet wird, vgl. hierzu noch folgenden Ausführungen) bevorzugt maximal 0,5 m Höhendifferenz.

Durch den thermischen Kontakt zwischen Kühlmediumrücklaufleitung und Transferleitung wird die Transferleitung und damit das darin transportierte Fluid wie z.B. Wasserstoff gekühlt. Für eine besonders gute Kühlung bis möglichst zum Verwendungsort ist es zweckmäßig, wenn die Umkehrstelle unmittelbar vor dem Verwendungsort vorgesehen ist, insbesondere dann, wenn die Begleitkühlung mittels Verdampferprinzip ausgeführt ist. Grundsätzlich kann die Umkehrstelle aber auch weiter vom Verwendungsort entfernt sein, d.h. z.B. auf halber Strecke, also höchstens 50% vom Verwendungsort entfernt oder auch nur höchstens 20% oder 10% vom Verwendungsort entfern. Letztlich wird die konkrete Position der Umkehrstelle aber von mehreren Parametern abhängen und geeigneten zu wählen sein. Die Länge der Transferleitung kann z.B. zwischen 20 m und 100 m betragen, was typische Werte bei Verwendung in Wasserstofftankstellen sind, wie eingangs erläutert. Es versteht sich aber, dass auch andere Längen in Betracht kommen.

Für einen besonders guten thermischen Kontakt zwischen Kühlmediumrücklaufleitung und Transferleitung ist es bevorzugt, eine oder mehrere thermische (oder thermomechanische) Kopplungseinrichtungen (auch als Kupplung bezeichnet) zu verwenden, mittels denen jeweils ein thermischer Kontakt zwischen der Kühlmediumrücklaufleitung und der Transferleitung hergestellt wird. Solche thermischen Kopplungseinrichtungen können in gleichmäßigen (oder auch anderen) Abständen vorgesehen sein, und z.B. selbst nur eine gewisse Länge von z.B. zwischen 10 cm und 2 m aufweisen. Ein maximaler Abstand zwischen zwei Kopplungseinrichtungen sollte zweckmäßigerweise nicht mehr als 5 m betragen. Bei guter thermischer Kopplung hierüber ist in den Bereichen vor und nach solchen Kopplungseinrichtungen keine besondere thermische Kopplung nötig, wenngleich eine gewisse Isolation der Transferleitung und/oder der Kühlmediumrücklaufleitung, insbesondere auch gemeinsam, zweckmäßig ist. Eine solche Isolation kann z.B. auf einem Elastomer und/oder einem Aerogel-haltigen Material basieren. Beispiele für solche Isolationsmaterialien sind z.B. Polymere mit geringer Wärmeleitfähigkeit, Armaflex, oder Cryogel (z.B. Produktname CryogelZ auf Basis amorpher Si - O Verbindungen), Polystyrol, Polyethylen, Polyurethan, Polymerschäume oder andere organische Verbindungen bzw. Schaumstoffe und Elastomere auf Basis synthetischen Kautschuks.

Die thermischen Kopplungseinrichtungen selbst dienen, wie erwähnt, der thermischen Anbindung von Kühlmediumrücklaufleitung und Transferleitung aneinander, um die Kälte des Kühlmediums auf die Transferleitung und damit das Fluid darin zu übertragen. Hierzu kann eine thermische Kopplungseinrichtung z.B. eines oder mehrere Formteile aufweisen, die jeweils an Oberflächen von Kühlmediumrücklaufleitung und Transferleitung anliegen, wobei die Formteile insbesondere aus demselben Material wie Kühlmediumrücklaufleitung und/oder Transferleitung bestehen oder eine Wärmeleitfähigkeit aufweisen, die zumindest so hoch, bevorzugt aber höher, insbesondere signifikant (z.B. mindestens 50%) höher, als diejenige von Kühlmediumrücklaufleitung und/oder Transferleitung ist. Typische Materialien für die Kühlmediumrücklaufleitung sind Stahl bzw. Edelstahl oder Kupferlegierungen, jene Materialien für die Transferleitung sind z.B. Stahl bzw. Edelstahl. Als Material für die Formteile kommen dann z.B. Aluminium- oder Kupferlegierungen in Betracht, die eine deutlich höhere Wärmeleitfähigkeit als jene der Transferleitung besitzen. Die Kontaktfläche zwischen Kühlmediumrücklaufleitung und Transferleitung, wenn diese aneinander liegen, ist geometrisch bedingt äußerst gering. Durch die Formteile kann also die Kontaktfläche (mittelbar über die Formteile) deutlich vergrößert werden. Ein Formteil kann hierzu z.B. in etwa einen dreieckigen Querschnitt aufwiesen, wobei zwei Seiten im Querschnitt gesehen aber nicht gerade sind, sondern einer Kreislinie folgen. Mit einer solchen Seite kann das Formteil an der Außenseite von Kühlmediumrücklaufleitung bzw. Transferleitung (die ja insbesondere als Rohre ausgeführt sind) bei entsprechender Dimensionierung flächig anliegen.

Ergänzend kann jede thermische Kopplungseinrichtung eine Spanneinrichtung aufweisen, mittels welcher die Kühlmediumrücklaufleitung und die Transferleitung zusammengehalten sind bzw. zusammengehalten werden. Denkbar ist hier z.B. eine Art Spannring, der beide Leitungen bzw. Rohre zugleich - sowie etwaige weitere Komponenten wie die Formteile - umgibt und diese zusammenhält. Insbesondere ist auch Isolationsmaterial zwischen der Spanneinrichtung und einer jeweiligen Oberfläche von Kühlmediumrücklaufleitung und/oder Transferleitung vorgesehen, es kann sich dabei z.B. um zwei gegenüberliegende, halbkreisförmig ausgeführte Schalen aus einem organischen Polymer mit geringer Wärmeleitfähigkeit handeln. Diese dienen dann der gleichförmigen Kraftübertragung zwischen der von außen angebrachten, z.B. metallischen Spannvorrichtung und den restlichen Einzelkomponenten, um die mechanische Stabilität der thermischen Kopplung zu ermöglichen. Die Spannvorrichtung kann außen dann auch noch mit einer thermischen Isolierung wie z.B. der schon erwähnten Isolation, basierend auf einem Elastomer und/oder einem Aerogel-haltigen Material umgeben sein. Diese Bauteile sind damit von der Umgebung thermisch isoliert.

Vorzugsweise umfasst (oder ist) das Kühlmedium ein Kältemittel, das in der Abkühleinrichtung - hierbei kann es sich z.B.um eine Kältemaschine, insbesondere Kompressionskältemaschine, handeln - zum Abkühlen des Fluids verwendet wird. Als solches Kältemittel kommt zum Beispiel Kohlenstoffdioxid (CO₂) in Betracht. Grundsätzlich kommen aber, je nach Zweck, alle Kältemittel in Betracht, welche z.B. nach DIN8060 zugelassen sind. Für Wasserstoff-Kühlungen sind z.B. R452a, R513 oder CO₂ (R744) relevant. Dieses Kältemittel kann dort dann z.B. abgezweigt und in die Kühlmediumvorlaufleitung eingespeist werden. An der Umkehrstelle zwischen Kühlmediumvorlaufleitung und Kühlmediumrücklaufleitung ist dann ein Expansionsventil vorgesehen, über das das Kältemittel in die Kühlmediumrücklaufleitung eingebracht wird, sodass das zunächst typischerweise großteils noch flüssige Kältemittel eingespritzt und dabei verdampft wird. Dies erlaubt eine besonders effiziente Kühlung unter Verwendung eines für das Abkühlen des Mediums ohnehin schon nötigen Kältemittels. Die Kühltemperatur und daher die Verdampfungstemperatur des Kältemittels sind vom Kältemittel selbst, dessen Massenstrom und dem Betriebsdruck der Kältemittelleitung abhängig. Bevorzugt werden Betriebsdrücke in solchen Verdampferrohren von bis zu 50 bar verwendet.

Alternativ ist es bevorzugt, wenn das Kühlmedium ein Kühltransfermedium (oder Kühltransportmedium) umfasst (oder ist), das in der Abkühleinrichtung (selbst) abgekühlt wird, z.B. vergleichbar dem Fluid, dann insbesondere auch mit dem vorstehend erwähnten Kältemittel. Dieses Kühltransfermedium wird dann mittels einer Pumpe durch die Kühlmediumvorlaufleitung und die Kühlmediumrücklaufleitung gepumpt. Die Pumpe kann z.B. in oder nahe der Abkühleinrichtung vorgesehen sein. Als Kühltransfermedium kommt hier z.B. Freezium, Antifrogen oder Therminol in Betracht, oder auch Wasser-Frostschutz (z.B. H₂O-Glycol)-Gemische; zudem könnte die Transferleitung auch mit kaltem gasförmigem oder flüssigem Wasserstoff oder einem anderen Gas gekühlt werden, wobei auch generell eine Kombination aus Flüssigkeit und Gas als Kühlmedium einsetzbar ist. Auf diese Weise kann ebenfalls die Abkühleinrichtung verwendet werden, um die Kühlung der Transferleitung zu bewirken. Wenn das kalte Rohr also kein Verdampferrohr ist, sondern ein Rohr mit einem kalten Kälteträgermedium, so sind dem zu kühlenden Fluid grundsätzlich keine Grenzen gesetzt (auch flüssiger Wasserstoff wäre denkbar). Es sollte lediglich sichergestellt sein, dass sich das zu kühlende Fluid in einer Gas- oder Flüssigphase oder Mischphase aus Gas und Flüssigkeit befindet und es nicht zum Anfrieren der Flüssigphase innerhalb der Leitung kommt.

Wie schon erwähnt, kommt als Fluid insbesondere Wasserstoff in Betracht, der dabei insbesondere derart gekühlt wird, dass er am Verwendungsort eine Temperatur von weniger als -40°C aufweist. Dies ist die nötige Temperatur bei Verwendung in einer Wasserstoff-Tankstelle. Insofern ist es auch bevorzugt, wenn als Verwendungsort eine Wasserstoff-Betankungsanlage (Dispenser) verwendet wird, in der der Wasserstoff zur Abgabe in einen Tank, insbesondere einen Tank eines Fahrzeugs, zur Verfügung gestellt wird bzw. abgegeben werden kann.

Die Erfindung betrifft neben dem Verfahren auch eine Anlage zum Abkühlen und Transportieren eines Fluids, wie sie vorstehend im Rahmen des Verfahrens schon erläutert wurde. Für weitere Ausgestaltungen und Vorteile der Anlage sei auf die vorstehenden Erläuterungen zum Verfahren verwiesen, die hier entsprechend gelten.

Zusammenfassend ist nochmals festzuhalten, dass ein wesentlicher Vorteil der Erfindung darin besteht, dass dezentral vorgekühlter Wasserstoff (oder anderes Fluid) über sehr lange Distanzen zwischen Vorkühlung und Dispenser (bzw. Verwendungsort) mit gleichbleibender Temperatur und Dichte transportiert werden kann. Dadurch werden, unabhängig von der Rohrleitungslänge, normgerechte und sichere Wasserstoffbetankungen ermöglicht. Damit entfällt der Einsatz eines separaten Wärmeübertragers oder eines Kühlsystems in unmittelbarer Nähe zum Dispenser. Dies trägt zur Schonung von Platzressourcen und zur Senkung von Investitionskosten bei. Auch nach lang andauernden Standby-Phasen können Wasserstoffbetankungen mit variierenden Massenströmen erfolgreich durchgeführt werden, da der Wärmeeintrag durch ungenügende thermische Isolationseigenschaften am Markt erhältlicher Materialien durch die vorliegende Begleitkühlung kompensiert wird. Um eine flächendeckende Wasserstoffinfrastruktur, unabhängig von der Umgebungstemperatur, versorgungssicher und räumlich flexibel zu gestalten, leistet die Erfindung einen signifikanten Beitrag. Dies wird auch seitens internationaler Legislativen angestrebt und bietet zukünftigen Anlagenbetreibern wesentliche Vorteile gegenüber existierenden Isolationskonzepten und Aufstellungsvarianten.

Die Erfindung ist anhand eines Ausführungsbeispiels in der Zeichnung schematisch dargestellt und wird im Folgenden unter Bezugnahme auf die Zeichnung beschrieben.

Kurze Beschreibung der Zeichnung
- Figur 1: zeigt schematisch eine erfindungsgemäße Anlage in einer bevorzugten Ausführungsform.
- Figur 2: zeigt schematisch die Anlage aus Figur 1 in einer detaillierteren Ansicht.
- Figur 3: zeigt schematisch eine thermische Kopplungseinrichtung aus der Anlage in Figur 2 in Schnittansicht.
- Figur 4: zeigt schematisch eine Kühlung in einer bevorzugten Ausführungsform der Erfindung.
- Figur 5: zeigt schematisch eine Kühlung in einer weiteren bevorzugten Ausführungsform der Erfindung.

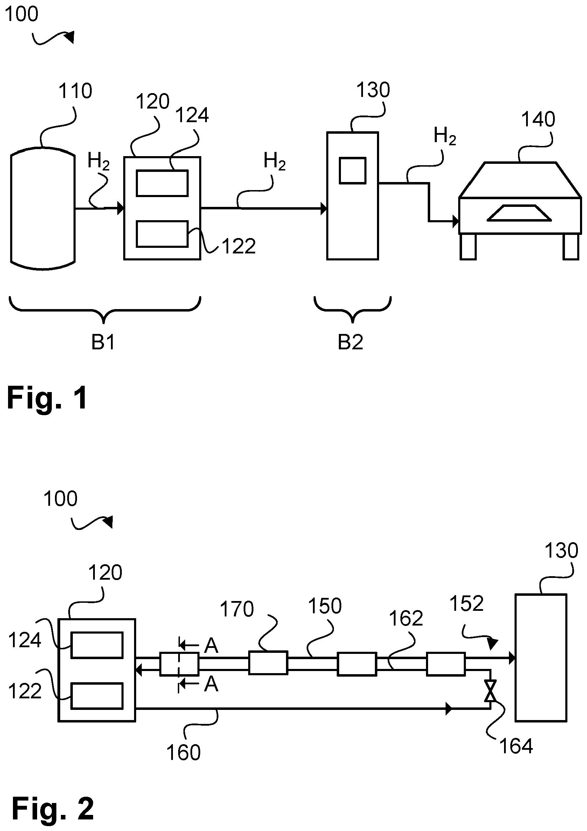

In Figur 1 ist schematisch eine erfindungsgemäße Anlage 100 in einer bevorzugten Ausführungsform gezeigt, anhand der zunächst eine typische und bevorzugte Verwendung der Erfindung beispielhaft erläutert werden soll. Bei der Anlage 100 handelt es sich beispielhaft um eine Wasserstofftankstelle. Wasserstoff H₂ wird hierbei in einem Speichertank 110 gespeichert, der z.B. regelmäßig nachgefüllt werden kann. Bei dem Speichertank 110 kann es sich z.B. um einen (einzelnen) Hochdruckbehälter handeln. Es kann aber z.B. auch ein Hochdruckspeichertank verwendet werden, der kaskadiert ausgeführt ist und deshalb aus mehreren einzelnen Speichern besteht. Denkbar ist aber ebenso, dass kein solcher Speichertank 110 oder Hochdruckspeicher verwendet wird (dass ein Speichertank also entfällt) und direkt, d.h. online über einen Wasserstoff-Kompressor betankt wird.

Eine andere Variante wäre z.B. eine mit flüssigem Wasserstoff versorgte Tankstelle mit Verdampfung von flüssigen Wasserstoff mit anschließender Kompression; Dabei wird das verdampfe und komprimierte Gas dann wieder entweder über eine online-Betankung oder über einen einzelnen Hochdruckbehälter (Gasspeicher) oder kaskadierten Gasspeichern dem Dispenser und letztlich dem Fahrzeug zugeführt.

Aus dem Speichertank 110 wird der Wasserstoff entnommen (oder anderweitig erhalten, wie vorstehend erläutert) und einer Abkühleinrichtung 120 zugeführt, in der z.B. eine Kompressionskältemaschine 122 und ein Wärmeübertrager bzw. Wasserstoff-Wärmeübertrager 124 vorgesehen sind. Eine Möglichkeit ist aber auch, dass Kälte über ein anderes Prinzip wie z.B. einer Expandermaschine (oszillierende Maschine wie z.B. eine Kolbenmaschine oder rotierende Maschine, wie z.B. eine Turbine) oder einer Absorptionskältemaschine erzeugt wird und diese Kälte dann in einem für die im Rahmen der vorliegenden Erfindung verfügbaren Kälteträgermedium zwischengespeichert wird. Ebenso möglich ist, dass mittels einer der beiden Varianten, d.h. mittels Expander- oder Absorptionsprinzip erzeugten Kälte der Kondensator einer ein- oder mehrstufigen Kompressionskältemaschine gekühlt wird. Diese Kompressionskältemaschine erzeugt wiederum die erforderliche Kälte auf jenem Temperaturniveau, welches für die Wasserstoff-Vorkühlung und/oder Begleitkühlung erforderlich ist. Der zunächst abgekühlte Wasserstoff wird dann zu einem Verwendungsort transportiert, der hier eine Betankungsanlage 130 bzw. einen Dispenser umfasst bzw. entsprechend ausgebildet ist. Dort kann der Wasserstoff H₂ entnommen werden, um z.B. ein Fahrzeug 140 zu betanken.

Wie erwähnt kann eine solche Wasserstofftankstelle in zwei Systembereiche unterteilt werden. Der erste Systembereich B1 umfasst eine Verdichtung, Speicherung sowie Konditionierung und Kühlung. Der zweite Systembereich B2 umfasst den Dispenser 130 und zugehöriges Betankungsequipment, wie beispielsweise eine Abreiß- und Betankungskupplung und einen Betankungsschlauch. Da beide Systembereiche aufgrund von örtlichen Gegebenheiten meist nicht immer direkt aneinander angrenzen, liegen häufig Distanzen von bis zu 100 m und in Sonderfällen sogar noch mehr zwischen den beiden erwähnten Systembereichen B1 und B2.

In Figur 2 ist die Anlage aus Figur 1 (bzw. Teile davon) in einer detaillierteren Ansicht gezeigt, wobei hier auf der linken Seite die Abkühleinrichtung 120 mit Kompressionskältemaschine 122 und Wärmeübertrager 124 und auf der rechten Seite der Dispenser 130 als Verwendungsort gezeigt sind.

Hierbei ist eine als Wasserstoff-Hochdruckleitung (Rohrleitung) ausgebildete Transferleitung 150 vorgesehen, die von der Abkühleinrichtung 120 zum Verwendungsort 130 führt und mittels welcher der Wasserstoff transportiert werden kann. Weiterhin sind eine Kühlmediumvorlaufleitung 160 sowie eine Kühlmediumvorlaufleitung 162 vorgesehen, bei denen es sich ebenfalls um eine Rohrleitung handelt. An einer Umkehrstelle 152 unmittelbar vor dem Verwendungsort 130 ist ein Expansionsventil 164 vorhanden (dieses ist nur vorhanden, wenn die Begleitkühlung mittels Kältemittelverdampfung ausgeführt ist; dies wird später noch näher erläutert), mit dem die Kühlmediumvorlaufleitung 160 in die Kühlmediumvorlaufleitung 162 übergeht und durch das ein Kältemittel als Kühlmedium verdampft werden kann. Hierauf soll später noch näher eingegangen werden. Die Kühlmediumvorlaufleitung 162 und die Transferleitung 150 (beides Rohre) sind parallel zueinander verlegt und beispielhaft mittels vier thermischen Kopplungseinrichtungen 170 thermisch in Kontakt gehalten. Solche thermische Kopplungseinrichtungen können in regelmäßigen oder unterschiedlichen Abständen zueinander über die gesamte Distanz zwischen Abkühleinrichtung 120 und Verwendungsort 130 vorgesehen sein. Dies ermöglicht eine optimale Wärmeübertragung zwischen den beiden Leitungen.

Zudem können Kühlmediumvorlaufleitung162 und Transferleitung 150 mittels einer thermischen Isolierung, basierend auf einem Elastomer oder einem Aerogel-haltigen Material, von der Umgebung wärmetechnisch, soweit als techno-ökonomisch umsetzbar, entkoppelt sein.

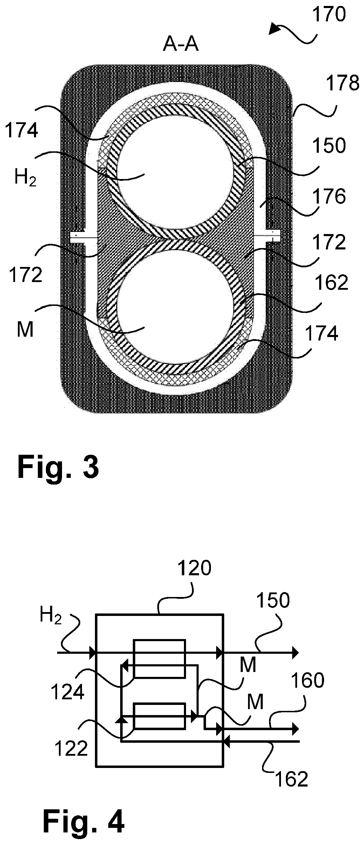

In Figur 3 ist nun eine der thermischen Kopplungseinrichtung 170 aus der Anlage 100 gemäß Figur 2 in Schnittansicht gezeigt, und zwar entlang der Linie A-A wie in Figur 2 zu sehen. Hier sind die als Rohre ausgebildete Kühlmediumvorlaufleitung 162 und Transferleitung 150 zu sehen, in denen Kühlmedium M bzw. der Wasserstoff H₂ (oder je nach Verwendung auch anderes Fluid, das gekühlt werden soll) fließt bzw. transportiert wird. Beide Rohre 150, 162 sind parallel zu einander verlegt und gemeinsam, mittels einer thermischen Isolierung (1), basierend auf einem Elastomer oder einem Aerogel-haltigen Material (10 und 12), von der Umgebung wärmetechnisch, soweit als techno-ökonomisch umsetzbar, entkoppelt.

Die Kontaktfläche der beiden Rohrleitungen 150, 162 selbst ist geometrisch bedingt äußerst gering, wie in Figur 3 deutlich zu sehen. Zwei gegenüberliegende Formteile 172 aus Aluminium oder einem Material mit einer vergleichbar hohen Wärmeleitfähigkeit sind mit den beiden Rohrleitungen 150, 162 formschlüssig verbunden. Zwei gegenüberliegende, halbkreisförmig ausgeführte Schalen 174 z.B. aus einem organischen Polymer mit geringer Wärmeleitfähigkeit dienen zur gleichförmigen Kraftübertragung zwischen der von außen angebrachten, insbesondere metallischen Spannvorrichtung 176 und den restlichen Einzelkomponenten (Formteile, Rohre, Schalen), um die mechanische Stabilität der thermischen Kopplungseinrichtung 170 zu ermöglichen. Diese Bauteile sind von der Umgebung thermisch isoliert, und zwar mittels einer Isolation 178, bei des sich um ein Material auf Elastomer- oder Aerogel-Basis handeln kann. Die Länge und Anzahl solche Kopplungseinrichtungen kann, wie erwähnt, je nach erforderlicher Wärmeübertragungsleistung variiert werden.

In Figur 4 ist schematisch eine Kühlung in einer bevorzugten Ausführungsform der Erfindung dargestellt, und zwar insbesondere die Bereitstellung des Kühlmediums, das wie in Bezug auf Figur 2 erläutert, in die Kühlmittelvorlaufleitung 160 eingebracht wird. Hierzu ist die Abkühleinrichtung 120 etwas detaillierter als in Figur 2 dargestellt. Dort ist die Kompressionskältemaschine 122 gezeigt, mittels welcher als Kühlmittel ausgebildetes Kühlmedium M wie z.B. Kohlenstoffdioxid verdichtet wird, das dann beim Entspannen abkühlt und so über den Wärmeübertrager 124 den Wasserstoff H₂ abkühlen kann, der dann in die Transferleitung 150 gegeben wird.

Von diesem verdichteten Kühlmittel M wird etwas (d.h. ein geringer Anteil von z.B. 5%) abgezweigt und in die Kühlmittelvorlaufleitung 160 eingebracht, dort wird es zunächst bis zum Expansionsventil 174, das in Figur 2 gezeigt ist, geleitet. Über das Expansionsventil wird das Kältemittel M in die Kühlmediumrücklaufleitung 162 eingespritzt und über die gesamte Länge dieses Rohres im Gegenstrom zur Strömungsrichtung des Wasserstoffs H₂ verdampft, bevor es im Kreislauf der Kältemaschine 122 rückkondensiert wird.

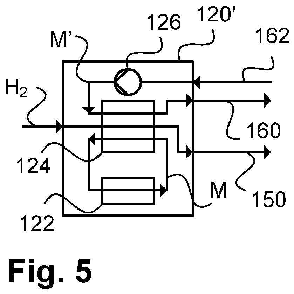

Alternativ zu einer Kühlung durch Kältemittelverdampfung kann auch ein Kältetransfermedium mit möglichst hoher spezifischer Wärmekapazität und möglichst geringer Viskosität realisiert werden, das als Kühlmedium verwendet wird. Hierzu ist in Figur 5 eine Abkühleinrichtung 120' gezeigt, die ebenfalls als dezentrales Kühlsystem dient und in dem in einem Kältespeicherkreislauf das Kältetransfermedium M' rückgekühlt wird. Wie auch bei der Variante gemäß Figur 4 wird hier mittels eines Kältemittels M der Wasserstoff H2 über den Wärmeübertrager 124 abgekühlt.

Zudem wird das Kältetransfermedium M' nun ebenfalls auf diese oder eine vergleichbare Weise (wie z.B. dessen Kühlung in einem separaten Kältespeicherkessel, welcher in unmittelbarer Nähe der Kältemaschine positioniert ist und in dem das Kältetransfermedium durch einen mit dem durch die Kältemaschine gekühlten Wärmetauscher (z.B. Plattenwärmetauscher) gekühlt wird) abgekühlt. Beispielhaft wird eine Pumpe 126 verwendet, mittels welcher das Kältetransfermedium M' durch den Wärmeübertrager 124 und dann in die Kühlmediumvorlaufleitung 160 gepumpt wird. Das über die Kühlmediumrücklaufleitung 162 zurückströmende Kältetransfermedium M' entspricht einem Rücklauf der Pumpe 126. Das in Figur 2 gezeigt Expansionsventil ist dann, wie schon erwähnt, nicht nötig.

## Patentansprüche

1. Verfahren zum Abkühlen und Transportieren eines Fluids (H₂), bei dem das Fluid (H₂) in einer Abkühleinrichtung (120, 120') abgekühlt und dann mittels einer Transferleitung (150) an einen von der Abkühleinrichtung (120, 120') entfernten Verwendungsort (130) transportiert wird,
wobei ein Kühlmedium (M, M') aus der Abkühleinrichtung (120, 120') entnommen und über eine Kühlmediumvorlaufleitung (160) bis zu einer Umkehrstelle (152) zwischen der Abkühleinrichtung (120, 120') und dem Verwendungsort (130) transportiert und von dort in einer Kühlmediumvorlaufleitung (162), die zumindest abschnittsweise in thermischem Kontakt mit der Transferleitung (150) steht, zurück zur Abkühleinrichtung (120, 120') transportiert wird.

2. Verfahren nach Anspruch 1, wobei die Kühlmediumrücklaufleitung (162) zwischen der Umkehrstelle (152) und der Abkühleinrichtung (120, 120') parallel zur Transferleitung (150), und insbesondere in zumindest mittelbarem Kontakt zur Transferleitung (150), verläuft.

3. Verfahren nach Anspruch 1 oder 2, wobei eine oder mehrere thermische Kopplungseinrichtungen (170) verwendet werden, mittels denen jeweils ein thermischer Kontakt zwischen der Kühlmediumrücklaufleitung (162) und der Transferleitung (150) hergestellt wird.

4. Verfahren nach einem der vorstehenden Ansprüche, wobei das Kühlmedium (M) ein Kältemittel umfasst, das in der Abkühleinrichtung (120) zum Abkühlen des Fluids (H₂) verwendet und dort insbesondere abgezweigt wird, und wobei an der Umkehrstelle (152) zwischen Kühlmediumvorlaufleitung (160) und Kühlmediumrücklaufleitung (162) ein Expansionsventil (164) vorgesehen ist, über das das Kältemittel (M) in die Kühlmediumrücklaufleitung (162) eingebracht wird.

5. Verfahren nach einem der Ansprüche 1 bis 3, wobei das Kühlmedium (M') ein Kühltransfermedium umfasst, das in der Abkühleinrichtung (120') abgekühlt und mittels einer Pumpe (126) durch die Kühlmediumvorlaufleitung (160) und die Kühlmediumrücklaufleitung (162) gepumpt wird.

6. Verfahren nach einem der vorstehenden Ansprüche, wobei als Fluid (H₂) Wasserstoff verwendet wird, der insbesondere derart gekühlt wird, dass er am Verwendungsort (130) eine Temperatur von weniger als -40°C aufweist.

7. Verfahren nach Anspruch 6, wobei als Verwendungsort (130) eine Wasserstoff-Betankungsanlage verwendet wird, in der der Wasserstoff (H₂) zur Abgabe in einen Tank, insbesondere einen Tank eines Fahrzeugs (140), zur Verfügung gestellt wird.

8. Anlage (100) zum Abkühlen und Transportieren eines Fluids (H₂), mit einer Abkühleinrichtung (120, 120'), die dazu eingerichtet ist, das Fluid (H₂) abzukühlen, und einer Transferleitung (150), mittels welcher das Fluid (H₂) von der Abkühleinrichtung (120, 120') zu einem entfernten Verwendungsort (130) transportierbar ist,
mit einer Kühlmediumvorlaufleitung (160), die von der Abkühleinrichtung (120, 120') bis zu einer Umkehrstelle (152) zwischen der Abkühleinrichtung (120, 120') und dem Verwendungsort (130) verläuft und in eine Kühlmediumrücklaufleitung (162), die zumindest abschnittsweise in thermischem Kontakt mit der Transferleitung (150) steht und zur Abkühleinrichtung (120) zurück verläuft, übergeht,
wobei Anlage (100) derart eingerichtet ist, dass ein Kühlmedium (M, M') aus der Abkühleinrichtung (120, 120') entnehmbar und über die Kühlmediumvorlaufleitung (160) und die Kühlmediumrücklaufleitung (162) wieder zurück in die Abkühleinrichtung (120, 120') transportierbar ist.

9. Anlage (100) nach Anspruch 8, mit einer oder mehreren thermischen Kopplungseinrichtungen (170), die jeweils zur Herstellung eines thermischen Kontakts zwischen der Kühlmediumrücklaufleitung (162) und der Transferleitung (150) ausgebildet sind.

10. Anlage (100) nach Anspruch 9, wobei jede thermische Kopplungseinrichtung (170) eines oder mehrere Formteile (172) aufweist, die jeweils an Oberflächen von Kühlmediumrücklaufleitung (162) und Transferleitung (150) anliegen, wobei die Formteile (172) eine Wärmeleitfähigkeit aufweisen, die zumindest so hoch, insbesondere höher als diejenige von Kühlmediumrücklaufleitung (162) und/oder Transferleitung (150) ist.

11. Anlage (100) nach Anspruch 9 oder 10, wobei jede thermische Kopplungseinrichtung (170) eine Spanneinrichtung (176) aufweist, mittels welcher die Kühlmediumrücklaufleitung (162) und die Transferleitung (150) zusammengehalten sind, wobei insbesondere Isolationsmaterial (174) zwischen Spanneinrichtung (176) und einer jeweiligen Oberfläche von Kühlmediumrücklaufleitung (162) und/oder Transferleitung (150) vorgesehen ist.

12. Anlage (100) nach einem der Ansprüche 8 bis 11, die für Wasserstoff als Fluid (H₂) eingerichtet ist und die eine Wasserstoff-Betankungsanlage am Verwendungsort (130) aufweist, in der der Wasserstoff zur Abgabe in einen Tank, insbesondere einen Tank eines Fahrzeugs (140), zur Verfügung stellbar ist.

13. Anlage (100) nach einem der Ansprüche 8 bis 12, die zur Durchführung eines Verfahrens nach einem der Ansprüche 1 bis 7 eingerichtet ist.
